Europäisches Patentamt

European Patent Office

Office européen des brevets

(11) Veröffentlichungsnummer: **0 284 961**
**A2**

## EUROPÄISCHE PATENTANMELDUNG

(21) Anmeldenummer: 88104571.0

(51) Int. Cl.⁴ **G01K 13/10**

(22) Anmeldetag: 22.03.88

(30) Priorität: 31.03.87 DE 3710721

(43) Veröffentlichungstag der Anmeldung:
05.10.88 Patentblatt 88/40

(84) Benannte Vertragsstaaten:
AT BE CH DE FR GB IT LI LU NL SE

(71) Anmelder: **Schiessmann, Ernst**
**Mühlwörthweg 4**
**D-6980 Wertheim-Wa(DE)**

(72) Erfinder: **Schiessmann, Ernst**
**Mühlwörthweg 4**
**D-6980 Wertheim-Wa(DE)**

(74) Vertreter: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Verfahren zur Messung des Temperaturprofils einer Kammer und Temperierkammer zur Durchführung dieses Verfahrens.**

(57) Die Erfindung bezieht sich auf ein Verfahren zur Messung des Temperaturprofils in einer Kammer und auf eine Temperierkammer, in der dieses Verfahren anwendbar ist.

Im Gegensatz zum bekannten Stand der Technik, bei dem ausschließlich mit ortsfesten, in bestimmten Abschnitten der Temperierkammer angeordneten Meßelementen gearbeitet wird, schlägt die Erfindung vor, zumindest ein bewegbares Meßelement anzuwenden, das stufenlos durch die Kammer bewegt wird. Die Erfindung ist insbesondere bei Durchlaufkammern geeignet. Das bewegbare Meßelement bildet einen Teil einer Temperaturmeßvorrichtung, mit deren Hilfe das Temperaturprofil innerhalb der Kammer exakt ermittelbar ist.

Fig 1

## Verfahren zur Messung des Temperaturprofils einer Kammer und Temperierkammer zur Durchführung dieses Verfahrens

Die Erfindung bezieht sich aus ein Verfahren zur Messung des Temperaturprofils einer Kammer und auf eine Temperierkammer zur Durchführung dieses Verfahrens nach dem Oberbegriff des Patentanspruchs 3.

Zur Bestimmung des Temperaturprofils in einem Raum bzw. in einer Kammer ist es bekannt, innerhalb des Raumes, dessen Temperaturprofil ermittelt werden soll, eine bestimmte Anzahl von Meßelementen, beispielsweise Sensoren, fest zu installieren, wobei die Anzahl der zu installierenden Meßelemente entsprechend der gewünschten Auflösung bestimmt wird. Die von diesen Sensoren aufgenommenen Meßwerte werden in einer bestimmten Zeitfolge abgefragt. Aus diesen einzelnen Meßwerten wird durch Interpolation ein stetiges Temperaturprofil ermittelt. Je kürzer die Reaktionszeit der Sensoren ist, desto schneller erfolgt die Erfassung der Istwerte und desto exakter ist eine Aussage über die Änderungen des Temperaturprofils. Die Anzahl der Sensoren und deren Reaktionszeit bestimmen die Genauigkeit der Messung.

Bei den bekannten Verfahren und Vorrichtungen zur Ermittlung von Temperaturprofilen ist der Aufwand für eine genaue Messung und für eine effektive Überwachung des Temperaturprofils sehr hoch, da für hohe Genauigkeitsanforderungen eine große Anzahl von Sensoren erforderlich ist und da zusätzlich für jeden Sensor neben den Installationselementen wie der Ausgleichsleitung, dem Anschluß etc. auch noch zusätzlich eine aufwendige Meßstellenumschaltung notwendig ist. Desweiteren bleibt die Genauigkeit des aufgenommenen Temperaturprofils beschränkt, da zwischen von benachbarten Sensoren aufgenommenen Meßwerten zur Erstellung eines stetigen Temperaturprofils grundsätzlich interpoliert werden muß.

Der Erfindung liegt die Aufgabe zugrunde, ein Verfahren zur Messung des Temperaturprofils einer Kammer bzw. eine Temperierkammer zur Durchführung dieses Verfahrens zu schaffen, bei denen ein stetiges, ausschließlich auf tatsächlich gemessenen Werten beruhendes Temperaturprofil mit geringem Aufwand ermittelt und überwacht werden kann.

Diese Aufgabe wird durch die Merkmale in kennzeichnenden Teil des Patentanspruchs 1 bzw. des Patentanspruchs 3 gelöst. Durch die kontinuierliche Hin-und Herbewegung eines Meßelements, bzw. eines Thermosensors, ist die Temperatur innerhalb einer Kammer fortlaufend meßbar. Eine Auswertung dieser Meßwerte ergibt ein mit den tatsächlichen Werten genau übereinstimmendes Temperaturprofil. Ein derart genaues Temperaturprofil ist bei den aus dem Stand der Technik bekannten Verfahren selbst bei Anwendung einer sehr großen Anzahl von Thermosensoren und den damit einhergehenden hohen Kostenaufwand nicht erreichbar.

Gemäß Unteranspruch 2 kann für jedes Werkstück ein diesem unmittelbar zuordnungsfähiges Temperaturprofil erstellt werden, dessen Auswertung wichtige Aufschlüsse bei der Ermittlung und Eingrenzung von etwaig auftretenden Störungen sowie deren Ursachen bringt. Je nach Anforderung an das Meßelement kann dieses gemäß Unteranspruch 4 oder Unteranspruch 5 ausgebildet sein. Die räumliche Entkopplung zwischen dem Meßabschnitt des Meßelements und der Antriebsvorrichtung gemäß Unteranspruch 6 erweitert die Auswahl geeigneter Antriebssysteme, wobei insbesondere die Weiterbildung gemäß Unteranspruch 7 eine hermetische räumliche Trennung zwischen Meßelement und Antriebsvorrichtung ermöglicht. Die Ausgestaltung gemäß Unteranspruch 9 ist insbesondere bei Durchlaufkammern vorteilhaft, deren Temperaturerhöhung im wesentlichen durch Infrarotstrahlung erzeugt wird. Sie ist jedoch auch bei durch Heißluft, Konvektion, eine Gasstrahlwand oder einen Brenner beheizten Durchlaufkammern anwendbar. Gemäß den Unteransprüchen 10 und 11 ist die Temperaturmessung genau dort möglich, wo das Werkstück die Durchlaufkammer durchläuft. Bei der Verwendung mehrerer gegenläufig bewegbarer Meßelemente gemäß Unteranspruch 12 läßt sich die Genauigkeit der Erfassung zusätzlich steigern. Bei entsprechender Linienführung für die Meßelemente kann auch die räumliche Temperaturverteilung innerhalb der Durchlaufkammer genau ermittelt werden.

Die Erfindung wird im folgenden anhand einer Ausführungsform unter Bezugnahme auf die Zeichnung erläutert. Es zeigen:

Fig. 1 eine perspektivische Darstellung der wesentlichen Teile einer erfindungsgemäßen Temperierkammer; und

Fig. 2 den Schnitt II-II durch die in Fig. 1 dargestellte Temperierkammer.

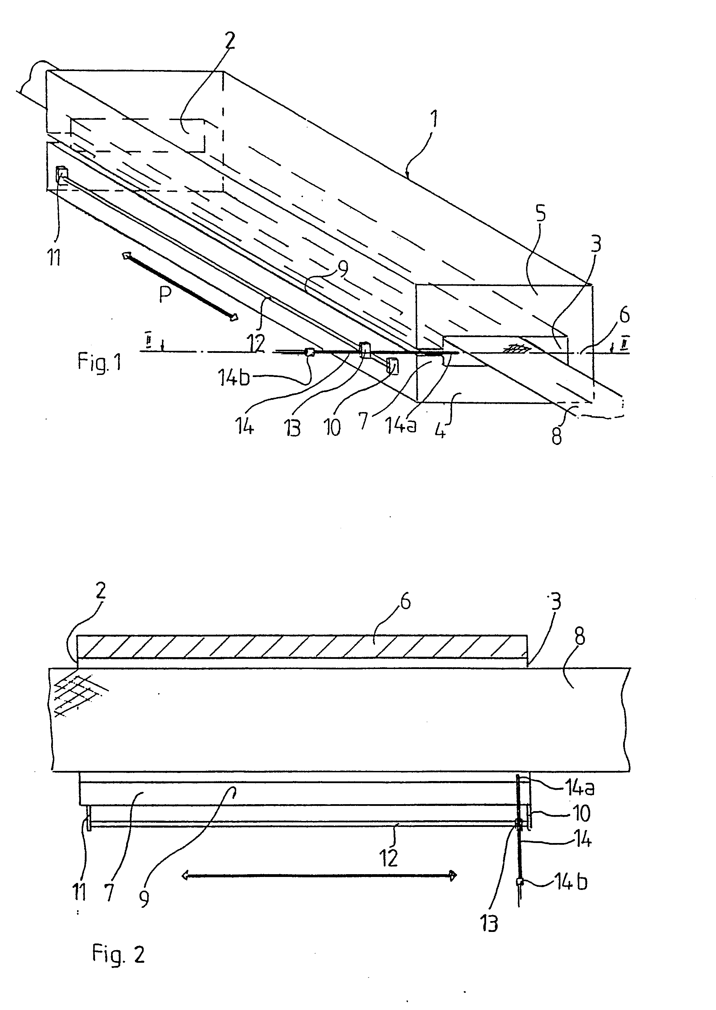

Die in den Fig. 1 und 2 dargestellte Temperierkammer ist als Durchlaufkammer 1 ausgebildet und dient dazu, Werkstücke, die durch die Durchlaufkammer 1 gefördert werden, von einem Eingangstemperaturniveau, mit dem ein Werkstück durch eine Einlauföffnung 2 in die Durchlaufkammer 1 eintritt, auf ein Ausgangstemperaturniveau zu bringen, d.h. zu erhitzen bzw. abzukühlen, mit dem ein Werkstück die Durchlaufkammer 1 durch eine Auslauföffnung 3 verläßt.

Die Durchlaufkammer 1 hat eine Unterwand 4, eine Oberwand 5 und zwei Seitenwände 6, 7. Sie wird durch eine beliebig ausgestaltbare Heiz- bzw. Kühlvorrichtung auf ein erwünschtes Temperaturniveau gebracht. Das gewünschte Temperaturniveau kann auf unterschiedlichen Abschnitten der Durchlaufkammer 1 unterschiedlich hoch sein.

Durch die Durchlaufkammer 1 läuft ein Fördermittel, das im Falle der in den Fig. 1 und 2 dargestellten Ausführungsform als Transportband 8 ausgebildet ist. Auf dem Transportband 8 werden die Werkstücke durch die Durchlaufkammer 1 gefördert. Anstelle des Transportbandes 8 kann auch eine kettengetriebene Anordnung oder eine Hubtransporteinrichtung vorgesehen sein.

In einem mittleren Abschnitt der Seitenwand 7 der Durchlaufkammer 1 ist ein die gesamte Wandstärke der Seitenwand 7 unterbrechender Schlitz 9 ausgebildet, der sich in Längsrichtung der Durchlaufkammer 1 über die gesamte Erstreckung derselben zwischen der Einlauföffnung 2 und der Auslauföffnung 3 durch die Seitenwand 7 erstreckt. Der Schlitz 9 ist etwa in der gleichen Höhe ausgebildet, in der das Transportband 8 die Durchlaufkammer 1 durchquert.

Auf der Außenseite der Seitenwand 7 ist mittels zweier Stützen 10, 11 eine Führungsstange 12 fest angebracht. Die Führungsstange 12 erstreckt sich nahezu über die gesamte Längserstreckung der Seitenwand 7 und verläuft parallel zu dem Schlitz 9 auf dem unter dem Schlitz 9 angeordneten Abschnitt der Seitenwand 7.

Auf der Führungsstange 12 ist ein Gleitfuß 13 verschiebbar gelagert, der in Richtung des Doppelpfeils P zwischen den Stützen 10, 11 hin- und herbewegbar ist. Der Gleitfuß 13 ist fest mit einem Meßelement 14 verbunden, das mit einem Meßabschnitt 14a den Schlitz 9 durchragt und in das Innere der Durchlaufkammer 1 vorsteht, und das mit einem Anschlußabschnitt 14b, der an dem dem Meßabschnitt 14a entgegengesetzen Ende des Meßelements 14 ausgebildet ist, sowohl an eine Antriebseinrichtung als auch an Zuleitungselemente angeschlossen ist, die vom Meßelement 14 aufgenommene Meßwerte an eine Recheneinheit weiterleiten. Antriebseinheit, Zuleitungselemente und Recheneinheit sind nicht dargestellt.

Das Meßelement 14 bzw. der Meßabschnitt 14a des Meßelements 14 kann als Thermofühler oder als Thermosensor ausgebildet sein. Statt eines Meßelements 14 können mehrere gleiche oder unterschiedliche Meßelemente vorgesehen sein.

Der Schlitz 9 kann auf bzw. in jeder Wand der Durchlaufkammer 1 angeordnet und ausgebildet werden. Er kann in beliebiger Linienführung, beispielsweise auch schräg, verlaufen. Entsprechendes gilt für die Führungsstange 12.

Der Gleitfuß 13 kann in Gleitführung, in Kugelführung etc. auf der Führungsstange 12 verschiebbar sein.

Als Antriebsvorrichtungen sind elektrische, pneumatische, hydraulische, magnetische und andere Antriebssysteme geeignet. Die Kraftübertragung auf den Anschlußabschnitt 14b des Meßelements 14 kann mittels Ketten-, Riemen-, Spindeltrieb oder durch eine andere geeignete Kraftübertragungseinrichtung erfolgen.

Statt der Durchlaufkammer 1 kann eine geschlossene Ofen- oder Kühlkammer vorgesehen sein. Besonders geeignet sind infrarotbeheizte Kammern.

Durch die stufenlose Bewegung des Meßelements 14 längs des Schlitzes 9 ist eine kontinuierliche Messung des Temperaturprofils innerhalb der Durchlaufkammer 1 möglich. Während eines Längshubes erfaßt der Meßabschnitt 14a des Meßelements 14 kontinuierlich die Temperatur. Diese Temperaturwerte werden durch den Anschlußabschnitt 14b und die Zuleitungselemente der Rechnereinheit übermittelt, die hieraus das Temperaturprofil der Durchlaufkammer 1 bestimmt.

Es ist außerdem möglich, daß Meßelement 14 simultan mit einem die Durchlaufkammer 1 durchlaufenden Werkstück mitwandern zu lassen, um exakt die Temperaturwerte zu ermitteln und zu speichern, mit denen dieses Werkstück beaufschlagt wird.

Die Erfindung bezieht sich auf ein Verfahren zur Messung des Temperaturprofils in einer Kammer und auf eine Temperierkammer, in der dieses Verfahren anwendbar ist.

Im Gegensatz zum bekannten Stand der Technik, bei dem ausschließlich mit ortsfesten, in bestimmten Abschnitten der Temperierkammer angeordneten Meßelementen gearbeitet wird, schlägt die Erfindung vor, zumindest ein bewegbares Meßelement anzuwenden, das stufenlos durch die Kammer bewegt wird. Die Erfindung ist insbesondere bei Durchlaufkammern geeignet. Das bewegbare Meßelement bildet einen Teil einer Temperaturmeßvorrichtung, mit deren Hilfe das Temperaturprofil innerhalb der Kammer exakt ermittelbar ist.

## Ansprüche

1. Verfahren zur Messung des Temperaturprofils einer Kammer, dadurch gekennzeichnet, daß ein Meßelement stufenlos durch die Kammer bewegt wird.

2. Verfahren nach Anspruch 1 für Durchlaufkammern für Werkstücke, dadurch gekennzeichnet, daß das Meßelement simultan voreilend oder nacheilend mit den Werkstücken in Durchlaufrichtung und gegenläufig bewegt wird.

3. Temperierkammer zur Durchführung des Verfahrens nach Anspruch 1 oder 2, insbesondere Durchlaufkammer für Werkstücke, mit einer Temperaturmeßvorrichtung zur Bestimmung des Temperaturprofils der Kammer, dadurch gekennzeichnet, daß die Temperaturmeßvorrichtung zumindest ein bewegbares Meßelement (14) aufweist, dessen Stellung innerhalb der Kammer (1) stufenlos veränderbar ist.

4. Temperierkammer nach Anspruch 3, dadurch gekennzeichnet, daß der Meßabschnitt (14a) des Meßelements (14) ein Thermosensor ist.

5. Temperierkammer nach Anspruch 3, dadurch gekennzeichnet, daß der Meßabschnitt (14a) des Meßelements (14) ein Thermofühler ist.

6. Temperierkammer nach einem der Ansprüche 3 bis 5, dadurch gekennzeichnet, daß das Meßelement (14) mittels einer Antriebsvorrichtung bewegbar ist, die außerhalb der Kammer (1) angeordnet ist.

7. Temperierkammer nach einem der Ansprüche 3 bis 5, dadurch gekennzeichnet, daß das Meßelement (14) mittels einer Antriebsvorrichtung bewegbar ist, die innerhalb der Kammer (1) angeordnet ist.

8. Temperierkammer nach Anspruch 6, dadurch gekennzeichnet, daß die Antriebsvorrichtung als Regelantrieb ausgebildet ist, durch dessen die Kammerwandung durchgreifendes Magnetfeld das Meßelement (14) bewegbar ist.

9. Temperierkammer nach Anspruch 6, dadurch gekennzeichnet, daß das Meßelement (14) durch eine in der Kammerwandung (4, 5, 6, 7) ausgestaltete Öffnung (9) in die Kammer (1) ragt und mechanisch mit der Antriebsvorrichtung verbunden ist.

10. Temperierkammer nach Anspruch 9, dadurch gekennzeichnet, daß die Öffnung als gerader Schlitz (9) ausgebildet ist.

11. Temperierkammer nach Anspruch 10, dadurch gekennzeichnet, daß der Schlitz (9) in der Kammerwandung (7) etwa in der Ebene ausgebildet ist, in der ein die Werkstücke tragendes Fördermittel (8) die Kammer (1) durchläuft.

12. Temperierkammer nach einem der Ansprüche 3 bis 11, dadurch gekennzeichnet, daß die Temperaturmeßvorrichtung zumindest zwei Meßelemente (14) aufweist und diese gegenläufig bewegbar sind.

Fig. 1

Fig. 2